# EUROPEAN PATENT APPLICATION

(11) **EP 0 580 247 A1**
(43) Date of publication of application: **26.01.1994**
(21) Application number: 93202133.0
(22) Date of filing: 20.07.1993
(51) Int. Cl.: A01M 7/00

(54) **Tunnel-like spraying vehicle**

(30) Priority: 20.07.1992 NL 9201297
(71) Applicant: MACHINEFABRIEK J.M. VAN DEN MUNCKHOF B.V., NL-5961 CV Horst (NL)
(72) Inventor: van den Munckhof, Mathijs René Marie Jozef, NL-5961 BM Horst (NL); van den Munckhof, Peter Jozef Marie, NL-5961 AK Horst (NL)
(74) Representative: Prins, Hendrik Willem

(57) **Abstract**

The invention relates to a spraying vehicle (1) comprising a tunnel-like structure (2) with two lateral spraying walls (4,5) provided with spraying means, wherein the spraying walls are each placed on a spraying wall chassis and are mutually connected via hinge means, with a spray casing which is provided on the front side in the direction of use with a spray cover and at the rear with at least one air inlet.

## Description

The present invention relates to a tunnel-like spraying vehicle, more particularly to a tunnel-like spraying vehicle wherein the distance between the lateral side walls is adjustable.

It is known with tunnel-like spraying vehicles to mutually connect both lateral side walls at the top via telescopic connecting rods. It is thus possible to place the lateral spraying walls at variable mutual distances. The distance between the lateral side walls is determined during spraying by the width of the crop for spraying and during movement on public roads by the maximum permissible vehicle width.

The invention has for its object to provide a tunnel-like spraying vehicle wherein the distance between the lateral side walls is easier to adjust and wherein a more stable construction is nevertheless obtained.

This is achieved with a spraying vehicle according to the invention which comprises a tunnel-like structure with two lateral spraying walls provided with spraying means, wherein the spraying walls are each placed on a spraying wall chassis and are mutually connected via hinge means. Because both lateral spraying walls are mutually joined via hinge means extending over a large part of the length of the spraying walls there results a very stable construction, particularly during use in the outward pivoted position. As a consequence of outward pivoting both lateral spraying walls will incline toward each other in the outward pivoted position, whereby the crops can be sprayed better and the tunnel therein often takes on a shape more adapted to the crop.

A very stable construction results when more preferably the hinge means comprise a hinge structure to which the spraying walls are connected on either side via a hinge. Not only is a minimum distance realized between the lateral spraying walls but a tunnel-like structure also results with considerable bending and torsion stiffness.

According to a preferred embodiment the hinge structure is a hinge frame and the hinged spraying walls are fixed via the hinge to either side of the hinge frame. By selecting a hinge frame as hinge structure, this hinge frame can also be used for fixing the upper screen.

In order to place the lateral spraying walls in the desired outward pivoted position it is recommended that the hinge structure is provided with a controllable extending shaft mounted thereon which is connected via extending rods to the spraying walls.

During transport of the spraying vehicle over public highways and during maneuvering along and between crops it is recommended that, in the case a tractive vehicle is used, this vehicle can pull the spraying vehicle forward from the front or from the side. For this purpose it is recommended that the pulling angle is adjustable. For optimum adjustment of the pulling angle it is recommended that a pull rod is connected pivotally to a spraying wall chassis and is provided with means for adjusting the pulling angle.

For optimum circulation of air through the lateral spraying walls from the air inlet to the spraying means it is preferred that a spraying wall comprises a rigid, modelled spray casing. In order to ensure that as little spraying agent as possible escapes outside the tunnel-like structure and that substantially only an internal air circulation takes place inside the tunnel-like structure, it is further recommended that a spray casing is provided on the front side in the direction of use with a spray cover and at the rear with at least one air inlet.

For optimum spraying of the crop it is preferred that the spray cover is provided with means for adjusting the spraying angle, wherein a spray casing wall preferably connects onto the spray cover.

The gutter preferably comprises a collecting tray for spraying agent, an outlet of which is in communication with spraying agent still to be sprayed. This construction makes it possible to re-use excess spraying agent. A saving of 30-50% can thus be realized in the consumption of spraying agent.

The gutter is preferably assembled from a frame with hingeable frame portions with which a fabric covering is tensioned. When a gutter designed in such manner makes contact with for instance a tree-trunk, damage to the gutter or the tree-trunk is prevented.

Preferably fixed to the underside of the gutter is a slide for guiding the gutter over the ground. It is thus possible to move at short distance above the ground.

Mentioned and other features of the tunnel-like spraying vehicle according to the invention will be further elucidated hereinbelow in the light of an embodiment given only by way of example and with reference to the annexed drawing.

In the drawing:
figure 1 shows a perspective, partly broken away view of the tunnel-like spraying vehicle according to the invention;
figure 2 shows a top view of the spraying vehicle of figure 1; and
figure 3 shows detail III in figure 1;
figure 4 is a perspective view of a gutter for receiving excess spraying agent; and
figure 5 shows a schematically depicted outlet for excess spraying agent.

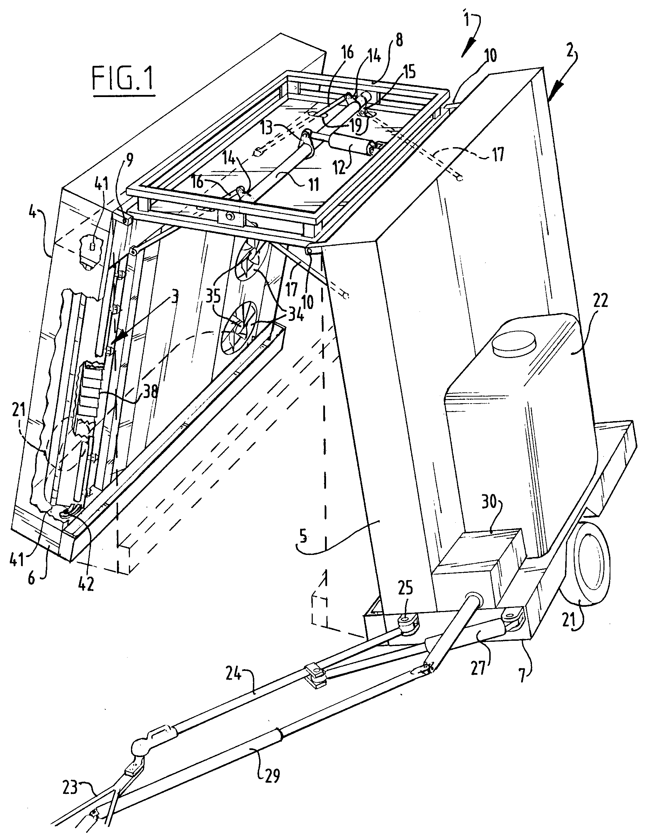

Figure 1 shows a spraying vehicle 1 according to the invention which comprises a tunnel-like structure 2 with two lateral spraying walls 4 and 5 provided with spraying means 3 and each placed on a spraying wall chassis 6 and 7.

Both spraying walls 4 and 5 are hingedly connected to each other via a hinge frame 8 to which both spraying walls 4 and 5 are fastened via hinges 9 and 10. Mounted in the hinge frame 8 is an extending shaft 11 which can be actuated via a cylinder 12 connected to a crank 13.

The extending shaft 11 is further provided with extending rods 16 and 17 connected thereto via cranks 14 and 15, which rods are connected to the hinged side walls 4 and 5. The extending rods 16 and 17 herein extend through openings 19 arranged in a tunnel ceiling 18.

Each side wall chassis 6 and 7 is provided with a wheel 20, 21 respectively.

The side wall chassis 7 is further provided with a tank 22 for spraying agent which is supplied via conduits (not shown) to the spray means 3.

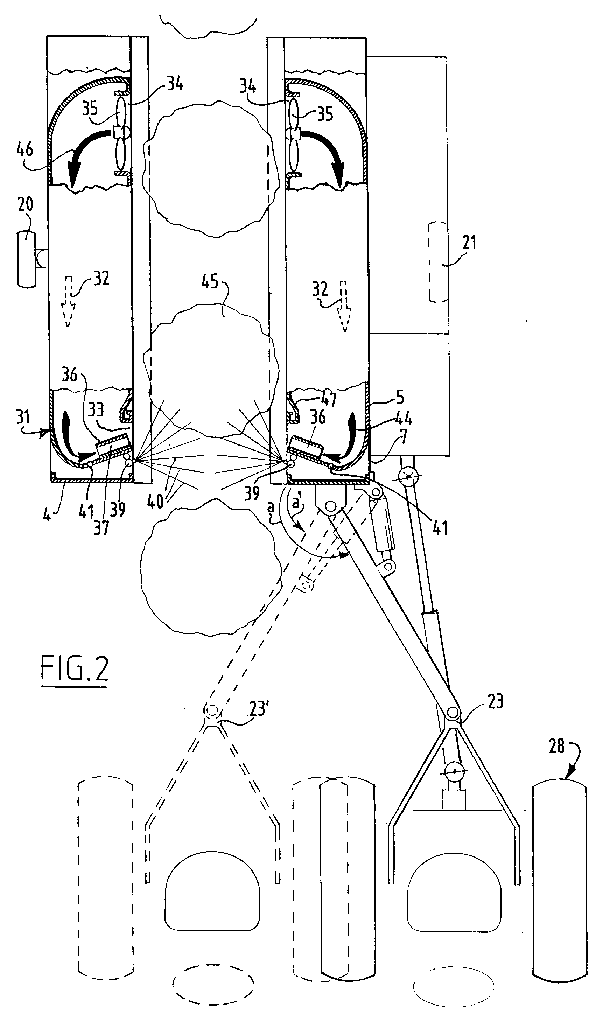

A drawbar 23 of a tractor is connected to a pull rod 24 which is fastened via a hinge 25 to the side wall chassis 7. Further connected pivotally to the pull rod 24 via a hinge 26 is an extending cylinder 27 which as adjusting means can set a pulling angle a between tractor 28 and structure 2 (see figure 2).

In order to energize inter alia the spraying means 3 and cylinder 12 the vehicle 1 is connected to the tractor 28 via a power take-off 29 connected to a gearbox 30.

Figure 2 shows in more detail the construction of both spraying walls 4 and 5. The spraying walls 4 and 5 comprise a rigid, modelled spray casing of for instance a plastic such as polyester, which is provided with an air outlet 33 located on the forward side in the direction of use as according to arrow 32 and an air inlet 34 located at the rear. Received in the air inlet 34 are a number of fans 35 for drawing in air and transporting the air as according to arrow 46.

Placed on the air outlet 33 is a spray cover 36 which forms an elongate slot 37 having guide plates 38 arranged therein. Adjacently and in front of the spray cover 36 are placed a number of spray nozzles 39 for generating jets 40 of spraying agent.

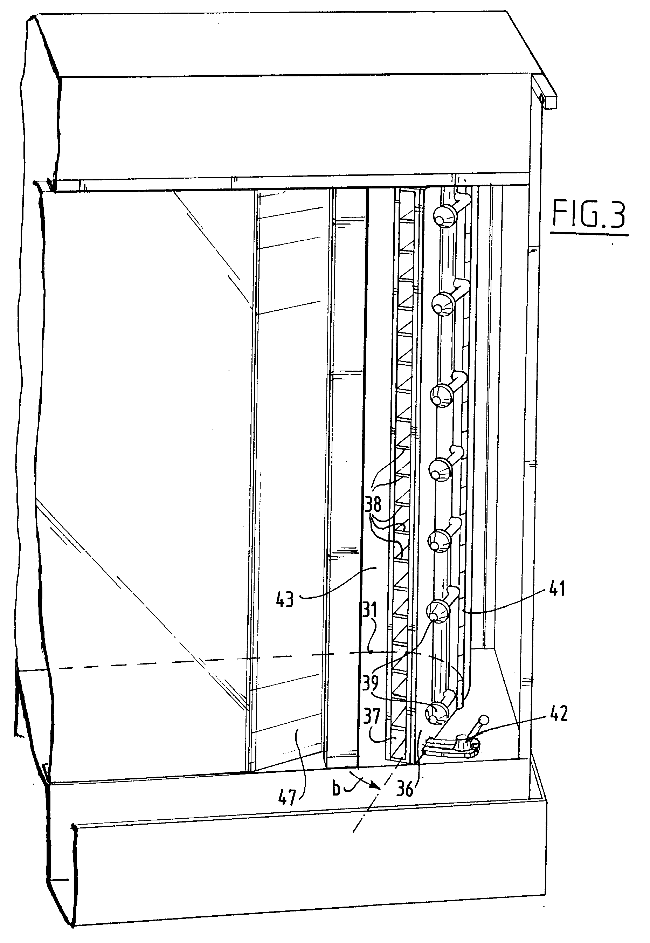

As shown in more detail in figure 3, the spray cover 36 is pivotable about its longitudinal axis on a hinge 41 and lockable in a determined spraying angle b using a setting member 42. Clearly visible is a gap 43 between the spray cover 36 and a smooth inner panel 47 of the spray casing 31. Due to the shaping of the spray casing 31 air will be generated mainly as according to arrow 44 via the spray cover 36 to the space inside the tunnel-like structure 2 and to the crop, for instance trees 45, in a slightly downward direction. Due to the circulation according to arrows 46, 32, substantially no spraying agent will escape outside the structure 2 and this circulation is substantially wholly internal.

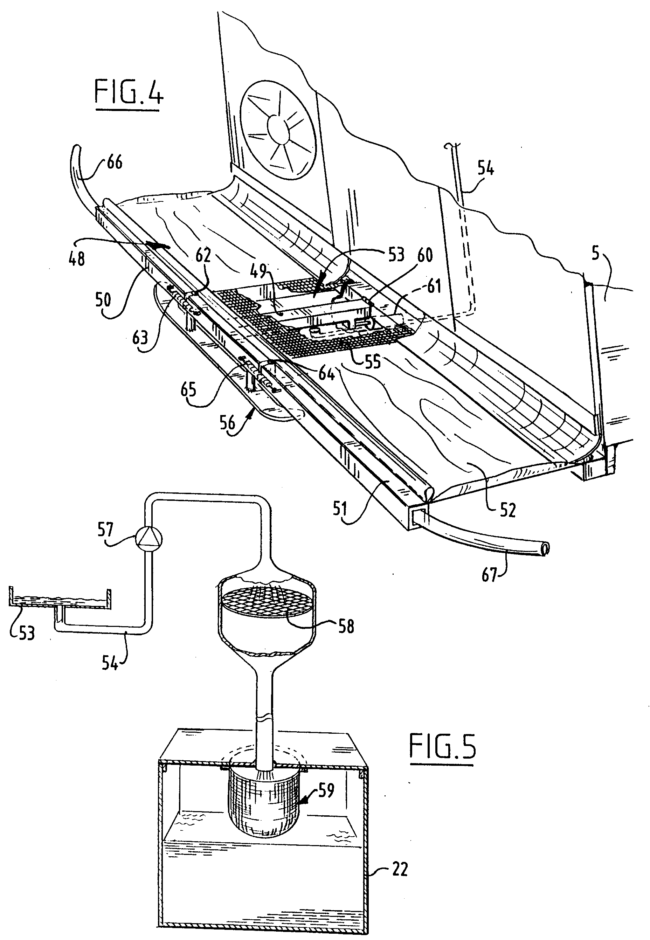

Figure 4 shows a gutter 48 for receiving excess spraying agent. A substantially T-shaped frame 49 is fixed hingedly to the lateral side wall 5 via a horizontal hinge 60 controllable with a cylinder 61, to which frame via vertical hinges 62, 64 are fixed armes 50, 51 pivotable counter to the spring force of respective springs 63, 65. An arm 50, 51 can thus move hingedly sideways when an obstacle, for instance a tree-trunk, makes contact with the flexible rod 66 or 67. The lateral side wall 5, the T-shaped frame 49 and the pivotable arms 50, 51 tension a fabric covering 52. Gutter 48 is provided close to the centre with a collecting tray 53 for collection of excess spraying agent.

Collecting tray 53 is provided with an outlet 54 for draining excess spraying agent. The top of collecting tray 53 is covered by a screen structure 55 for holding back contaminants carried along with the excess spraying agent.

Fixed to the underside of gutter 48 is a slide 56 for guiding the gutter 48 over the ground.

As shown in figure 5, the excess spraying agent received in the collecting tray 53 is fed back by a pump 57 placed in outlet 54 to the tank for spraying agent 22 via a jet inhibitor 58 and a filter bag 59.

## Claims

1. Spraying vehicle comprising a tunnel-like structure with two lateral spraying walls provided with spraying means, wherein the spraying walls are each placed on a spraying wall chassis and are mutually connected via hinge means.

2. Spraying vehicle as claimed in claim 1, wherein the hinge means comprise a hinge structure to which the spraying walls are connected on either side via a hinge.

3. Spraying vehicle as claimed in claim 2, wherein the hinge structure is a hinge frame and the hinged spraying walls are fixed via the hinge to either side of the hinge frame.

4. Spraying vehicle as claimed in claim 2 or 3, wherein the hinge structure is provided with a controllable extending shaft mounted thereon which is connected via extending rods to the spraying walls.

5. Spraying vehicle as claimed in claims 1-4, wherein a pull rod is connected pivotally to a spraying wall chassis and is provided with means for adjusting the pulling angle.

6. Spraying vehicle as claimed in claims 1-5, wherein a spraying wall comprises a rigid, modelled spray casing.

7. Spraying vehicle as claimed in claims 1-6, wherein a spray casing is provided on the front side in the direction of use with a spray cover and at the rear with at least one air inlet.

8. Spraying vehicle as claimed in claim 6 or 7, wherein the spray cover is provided with means for adjusting the spraying angle.

9. Spraying vehicle as claimed in claim 8, wherein a spray casing wall connects onto the spray cover.

10. Spraying vehicle as claimed in any of the foregoing claims, characterized in that at least one of the lateral spraying walls is provided with a gutter for receiving excess spraying agent.

11. Spraying vehicle as claimed in claim 10, characterized in that the gutter comprises a collecting tray for spraying agent, an outlet of which is in communication with spraying agent still to be sprayed.

12. Spraying vehicle as claimed in claims 10 or 11, characterized in that the gutter is assembled from a frame with hingeable frame portions with which a fabric covering is tensioned.

13. Spraying vehicle as claimed in any of the claims 10-12, characterized in that a slide is fixed to the underside of the gutter for guiding the gutter over the ground.
